# EUROPEAN PATENT SPECIFICATION

(11) **EP 3 899 330 B1**
(45) Date of publication and mention of the grant of the patent: **13.07.2022**
(21) Application number: 19821224.3
(22) Date of filing: 12.12.2019
(51) Int. Cl.: F16K 15/14, E03C 1/298

(54) **VALVE FOR A SANITARY APPLIANCE**
VENTIL FÜR EINE SANITÄRARMATUR
VANNE POUR UN APPAREIL SANITAIRE

(30) Priority: 17.12.2018 NL 2022221
(43) Date of publication of application: 27.10.2021
(73) Proprietor: Pipelife Nederland B.V., 1601 MA Enkhuizen (NL)
(72) Inventor: SENTEUR, Michel Jacques, 1521 NA Wormerveer (NL)
(74) Representative: Nederlandsch Octrooibureau
(86) International application number: PCT/NL2019/050829
(87) International publication number: WO 2020/130807

(56) References cited:
- WO-A1-90/03822
- GB-A- 2 346 198
- US-A- 4 870 992
- US-B1- 7 445 028
- US-B2- 8 322 378

## Description

### BACKGROUND OF THE INVENTION

### 1. Field of the invention

The present invention relates to a valve for a sanitary appliance. The invention further relates to sanitary appliances comprising such a valve.

### 2. Description of the related art

Non-return valves for integration into sanitary appliances such as sinks, floor drains or urinals serve to permit the flow of liquid in one direction while preventing gaseous flow in the opposite direction. Also backflow of liquid is prevented. Such valves are especially useful for waterless urinals, where the valves are placed in the drain channel. GB 2346198 A and US 4,870,992 A describe examples of such non-return valves.

A common type of valve is a flexible tube which is flattened at one side to close off the drain channel in the absence of liquid flowing into the drain and which opens when liquid pressure causes the tube to open the flattened part.

An example of such a valve is described in WO2004/059198 or EP1174549.

The present valves have the disadvantage that when the valve is open, still a significant portion of the drain channels' cross-section is obstructed by the tube. This reduces the flow velocity and may even cause congestion of dirt. Furthermore, the present valves have a relatively large opening resistance. Because of the symmetry of the valve, it is better adapted for placement in a vertical channel. When placed horizontally, a residual amount of water may be unable to pass through the valve.

In light of the above, it would be desirable to provide a valve which at least partially overcomes some of the inconveniences of the prior art.

### SUMMARY OF THE INVENTION

According to the invention there is provided a valve for a drain channel of a sanitary appliance, comprising: a flexible tubular structure extending between an inlet end defining an inlet opening for receiving fluid into an interior of the tubular structure, and an outlet end downstream of the inlet opening, the tubular structure defining a flow direction, wherein the tubular structure is adapted to deform from a closed state, in absence of fluid applying a pressure to the interior of the tubular structure, in which the outlet end is closed, to an open state, in response to a pressure of fluid applied to the interior of the tubular structure, in which the outlet end is open, defining an outlet opening; wherein the outlet end has a V-shaped cross-section across the flow direction when the tubular structure is in the closed state.

The valve according to the invention has a reduced opening resistance compared to the prior art, i.e. requires a lower pressure or amount of fluid for opening the tubular structure. Furthermore, the valve's V-shape allows for wider opening, while also having excellent sealing capabilities. The valve may thus be used as a waterless trap in drain channels of sinks, urinals or other sanitary appliances. Importantly, because of its configuration, the valve can be placed either horizontally or vertically in a drain channel.

The cross-sectional plane is V-shaped when seen perpendicular to the flow direction, i.e. parallel to the plane defined by the inlet opening. The V-shape comprises and may consist of straight portions which are connected to one another at a single central point. The straight portions, or legs, define an angle between them, which may be between 30 and 150 degrees, preferably between 45 and 135 degrees, more preferably between 65 and 115 degrees, even more preferably about 90 degrees. Preferably, the straight portions do not have any curvature. Slight curvature of the straight portions, i.e. with a radius of curvature of at least 5 times the length of a straight portion, preferably at least 10 times the length of a straight portion, is however not excluded. A curved or straight horizontal portion may be provided in between the straight portions of the V-shaped cross-section, as long as this portion is much smaller than the straight portions. In an embodiment, the cross-section of the outlet end consists only of a V-shape.

The V-shaped cross-section is formed as two V-shaped layers, connected at the extremities of the straight portions, away from the central point. The two V-shaped layers terminate in upper and lower lips, which seal against one another in the closed state. This ensures a good closing or sealing. In the event of backflow, the V-shape will remain closed with the lips engaged together over their full extent, without passing significant amounts of fluid. The two V-shaped layers of the V-shape preferably consist of only straight portions, which can be sized and fabricated in a predictable manner, such that the outlet end ensures proper sealing when closed.

The central point of the V-shape is most sensitive to fluid pressure. When fluid, particularly liquid, is offered through the inlet opening, the outlet end will normally start opening at the central point and open as far as is needed for the fluid to flow through. When placed horizontally, the central point of the V-shape is preferably at a lower side, such that any liquid is drawn towards to the central point of the V-shape where opening should be initiated. A person skilled in the art will understand that the term 'central point' may refer to an area which is slightly larger than a mathematical point. The central point may in fact form a small radius of curvature between the two straight portions, preferably having a radius of curvature of less than 10 mm and preferably less than 5 mm.

As the valve opens, the upper and lower lips separate and may open in at least three directions: the upper lip bulges upwards, while the lower lip opens towards the left and towards the right. In this way the valve hardly obstructs the fluid flow in its open state. In the open state, the outlet end defines an outlet opening.

The central point of the V-shaped outlet end is preferably located off-centre or eccentric with respect to the inlet opening, i.e. away from a line along the flow direction which goes through the centre of the inlet opening. When the drain channel is placed horizontally, the central point of the V-shape is preferably located at the bottom of the channel. In this way, the amount of liquid required for opening the valve is reduced compared to other orientations. Additionally, the outlet end will provide for good sealing, since the upper lip will move in the direction of gravity when closing.

Preferably, the central point of the V-shaped outlet end is adapted to be located at least two times closer to one side of the drain channel than to the opposite side of the drain channel. More preferably, at least four times closer, even more preferably at least ten times closer.

The tubular structure is hollow and allows fluid to flow along the flow direction from the flange to the outlet opening in its open state. The tubular structure may in its closed state have the shape of a cone, a paraboloid, a wedge or a funnel or any other shape which extends from a circular, ellipse-shaped or polygonal inlet opening to a V-shaped outlet end.

Although reference is given to an open state and a closed state, a person skilled in the art will appreciate that positions in between are also possible; when only a small amount of fluid is offered through the inlet opening, the outlet end may open only locally, starting from the central point of the V-shape, such that the fluid can flow through but the outlet end is not opened unnecessarily far in order to avoid any fluid, such as gases, flowing backwards.

The deforming of the valve from the open state to the closed state is reversible and repeatable for a virtually unlimited number of times, such that the valve will not break down during its lifetime. In practice, deforming could take place at least 1,000,000 times.

The shape of the inlet opening is preferably determined by the shape of the cross-section of the drain channel. The flange may have a circular shape, such that also the inlet opening may have a circular shape. Alternatively, flange and inlet opening may have an ellipse shape or may be square or rectangular.

In an embodiment, in the closed state the tubular structure comprises a conical structure with a base and an apex, and wherein the base is substantially parallel to the inlet opening and the apex coincides with the central point of the V-shaped cross-section of the outlet end.

The conical structure may have a length of at least the width of the inlet opening. The conical shape allows for a large area which can receive pressure from fluid flowing through the inlet opening, which results in a low opening resistance of the valve. In this way the flow velocity is hardly affected by the presence of the valve. The risk of congestion in the valve or in the channel because of the presence of the valve is thus reduced. The base of the cone may coincide with the inlet opening. Alternatively, the base may be parallel to but distanced from the inlet opening (i.e. define an angle of about 90 degrees with respect to the flow direction), in which case a cylindrical part of the tubular structure may be provided in between the flange and the base of the conical structure. The base may define an angle of between 60 and 120 degrees, preferably between 80 and 100 degrees, with respect to the flow direction.

In an embodiment, the length of the conical structure (in the flow direction) and the width of the inlet opening have a size ratio of between 0.5:1 and 2:1, preferably between 1:1 and 2:1, more preferably about 1.2:1. This allows for a large enough surface area which can receive pressure from the fluid.

In an embodiment, the tubular structure comprises two lateral wings extending along the flow direction, wherein in the closed state the wings together form the V-shaped cross-section at the outlet end. The wings have a folded two-layer sheet-like structure and may be triangular. The two layers extend in the flow direction to terminate in the upper and lower lips and can divide or open when the tubular structure changes to the open state. The wings allow for sufficient surface area of the tubular structure in order to allow for minimum obstruction of the channel in the open state. In the open state the wings may thus be unfolded and be indistinguishable from the remainder of the tubular structure.

In an embodiment, in the closed state the V-shaped cross-section defines a sealing line with a length which is between 100% and 200% of the width of the inlet opening, preferably between 120% and 150% of the inlet opening. This allows for a large outlet opening in the open state of the tubular structure.

In an embodiment, the valve is sized such that in the closed state the apex and the lateral tips of the wings are close to or in contact with the drain channel. 'Close to' means in this context a distance of less than 10%, preferably less than 5% of the width of the channel. The lateral tips of the wings may correspond to the ends of the V-shaped cross-section of the outlet end.

In an embodiment, the outlet opening has, without stretching, an area of at least 60% of the inlet opening, preferably at least 70% of the inlet opening, more preferably at least 80% of the inlet opening. 'Without stretching' means in this context that the circumference of the outlet opening is no longer than two times the length of the sealing line as defined by the V-shaped cross-section of the outlet end when closed. A person skilled in the art will understand that when the outlet opening stretches, the outlet opening can be even larger than that. In an embodiment, the outlet opening has an area of at least 90% of the area of the inlet opening, preferably substantially equal to the area of the inlet opening.

In an embodiment, the valve defines an open passageway along the flow direction and along the full length of the valve, which has a cross-sectional area at least as large as the area of the outlet opening. In other words, the area of the outlet opening defines the narrowest passage through the valve.

In an embodiment, the tubular structure is made of elastic and/or resilient material. Elasticity further reduces the obstruction by the valve when the tubular structure is in the open state. Resilience allows for better closing in the absence of fluid flowing through the inlet opening.

In an embodiment, the tubular structure is made of silicone rubber or ethylene propylene diene monomer rubber (EPDM) or VITON, or similar materials. These materials comply with the requirements for use as a non-return valve in a drain channel. Preferably, the valve consists essentially of one of these materials.

In an embodiment, the valve is formed integrally by injection moulding. The valve is preferably moulded in a single piece, to avoid weaknesses in the structure.

In an embodiment, walls of the tubular structure have a thickness of between 0.2 and 2 millimetres, preferably between 0.5 and 1.5 millimetres, more preferably about 1 millimetres.

In an embodiment, walls of the outlet end have a thickness of between 0.3 and 1 millimetres, preferably about 0.5 millimetres. The walls may gradually thicken from the outlet end towards the flange.

In an embodiment, the outlet end comprises an extended area extending into the flow direction, such that the sealing line has not the shape of a line but of a planar area. In this way the sealing is improved. The extended area maintains the V-shape along the flow direction. Including extended area, the outlet end may have a length in the flow direction of 2 to 50 millimetres, preferably between 5 and 25 millimetres. Without extended area, the outlet end may have a length in the flow direction of less than 2 millimetres.

In an embodiment, the width of the inlet opening is between 20 and 200 millimetres, preferably between 40 and 120 millimetres, more preferably 40, 50, 80 or 120 millimetres, and the V-shaped cross-section includes straight portions which have a length of between 10 and 150 millimetres, preferably between 60 and 120 millimetres.

According to an aspect of the invention, there is provided a drain channel part for placement between a sanitary appliance and a public sewer system, wherein the drain channel part includes a valve as described herein. The valve is pre-mounted inside the drain channel part such that the channel part is ready to be placed in between other drain channel parts. In an embodiment, the flange of the valve is mounted in a circumferential wall of the drain channel part.

According to an aspect of the invention, there is provided a sanitary appliance, such as an urinal, drain or sink channel, including a valve as described herein.

### BRIEF DESCRIPTION OF THE DRAWINGS

The features and advantages of the invention will be further appreciated upon reference to the following schematic drawings of a number of exemplary embodiments, in which corresponding reference symbols indicate corresponding parts.
Figure 1 shows a valve according to an embodiment of the invention, in a drain channel;
Figure 2 shows the valve of Figure 1;
Figure 3A shows a side view of the valve of Figures 1-2;
Figure 3B show a cross-sectional views of the valve of Figures 1-3A;
Figure 4A shows the valve of Figures 1-3B with an open tubular structure;
Figure 4B shows the valve of Figures 1-4A with a closed tubular structure.

The figures are for illustrative purposes only, and do not serve as a restriction on the scope or the protection as laid down by the claims.

### DESCRIPTION OF ILLUSTRATIVE EMBODIMENTS

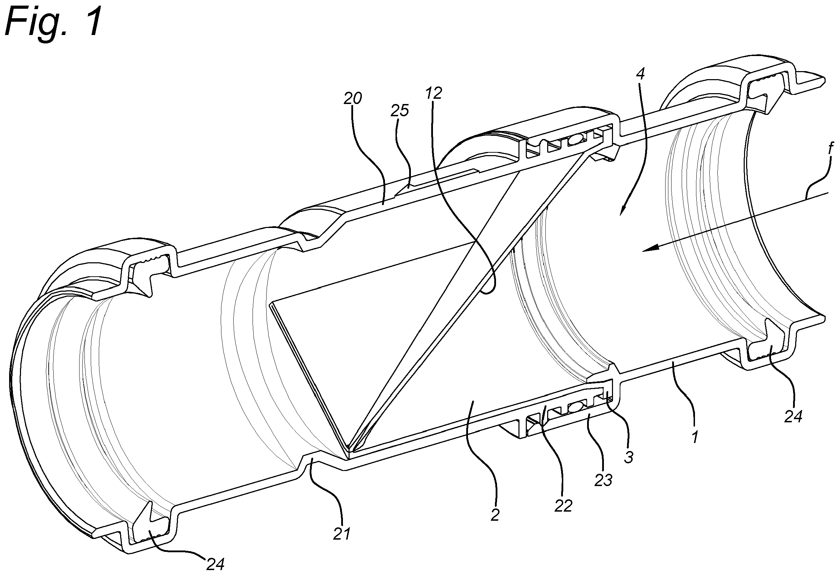

Figure 1 schematically shows a valve 2 according to an embodiment, which is mounted in a drain channel part 20 of a drain channel 1. The drain channel 1 defines a flow direction f. The valve 2 is shown in its closed state, in which no or almost no fluid can pass. The valve 2 includes a flange 3 at the inlet end, for mounting the valve 2 in a drain channel 1. The flange 3 is a flexible resilient ring which can for instance be clamped inside a drain channel part 20 or in between different drain channel parts in the drain channel 1. The inlet end, in particular the flange 3, defines an inlet opening 4, which is adapted to receive fluid, in particular liquid.

Figure 1 shows a portion 21 of the drain channel 1 with reduced cross-section downstream of the valve 2. This portion 21 functions to prevent damage to the valve 2 when channel or pipe parts surrounding the drain channel part 20 are pushed into the drain channel part 20. The flange 3 of the valve 2 is gripped between engaging portions 22, 23 of a circumferential wall of the drain channel part 20. At either end of the drain channel part 20, seals 24 are provided to avoid leakage at the junctions. An indicator 25, in this case an arrow sign, is provided on the outside of the drain channel part to indicate the desired flow direction f for correct working of the valve 2.

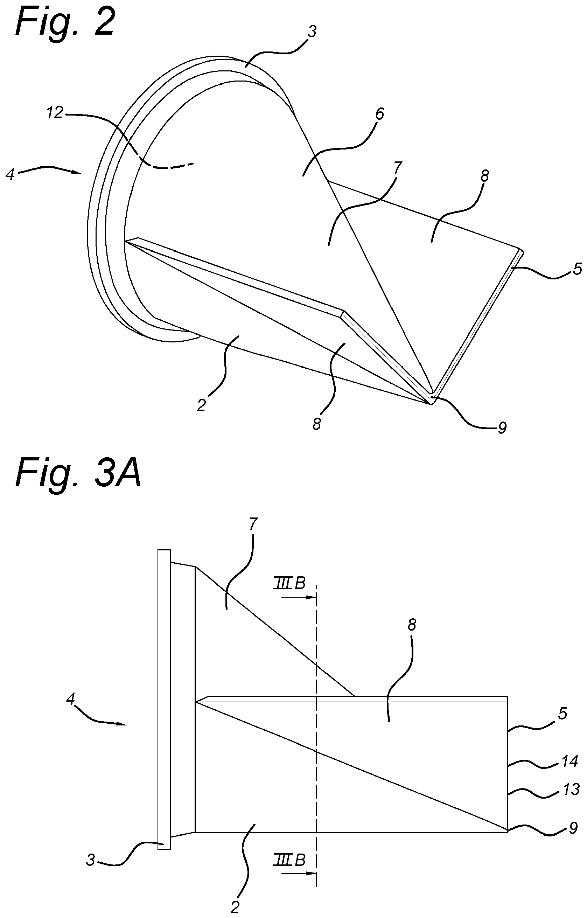

Figure 2 schematically shows the valve 2 of Figure 1, without the drain channel. The valve 2 includes a tubular structure 6 extending between the flange 3 and an outlet end 5. In use, liquid may flow into the inlet opening 4 defined by the flange 3, into the interior 12 of the tubular structure 6, such that it can apply a pressure against the interior 12 of the tubular structure 6 in order to open the tubular structure 6. The tubular structure 6 is made of a flexible, resilient material such that it will open in response to pressure upon receiving the fluid through the inlet opening 4, and close in the absence of receiving the fluid.

The tubular structure 6 includes a conical structure 7 with two lateral wings 8 attached to it. The conical structure 7 extends from the flange 3 to an apex 9, which coincides with the outlet end 5. The wings 8 are formed by a folded layer of flexible material, thus forming a two-layer structure. In the closed state of the tubular structure 6, the two layers are parallel to and in contact with one another, while in its open state the two layers divide, so as to allow the fluid to pass through the outlet end 5.

Figure 3A shows a side view of the valve 2 of Figures 1 and 2. The conical structure 7 has the shape of an oblique cone. The shortest line between the apex 9 and the flange 3 defines an angle of about 90 degrees with respect to the inlet opening 4 defining the base of the cone. In this way, the apex 9 may lie close to the sidewall of a drain channel when the valve is mounted (see also Figure 1). The wings 8 have a triangular shape and are attached to the conical structure 7 along the distance from the flange 3 to the apex 9. Near the flange 3, the wings 8 commence from two locations provided across a horizontal centre line of the inlet opening 4 defined by the flange 3. At the outlet end 5, the wings terminate in upper and lower lips 13, 14.

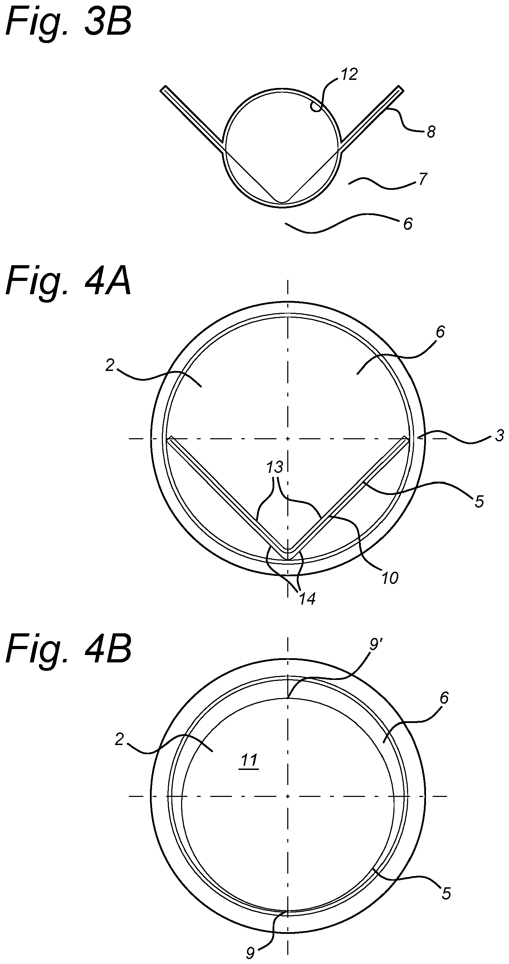

Figure 3B shows a cross-sectional view of the valve 2 halfway along the conical structure 7, the position of which is indicated in Figure 3A. The tubular structure 6 is in its closed state. The wings 8 extend from the conical structure 7 at a position halfway of its height. When pressure is applied against the interior 12 of the tubular structure 6, the conical structure 7 expands at the region where the wings 8 are attached to it, whereby the two layers of the wings 8 divide. In this manner the cross-sectional area of the tubular structure 6 can become substantially as large as the cross-sectional area of the drain channel in which it is placed, if the quantity or pressure of liquid so requires.

Figure 4A schematically shows a view of the valve 2 taken in a direction opposite to the flow direction, with the tubular structure 6 is in its closed state, such that the upper lips 13 and lower lips 14 of the wings seal the tubular structure at the outlet end 5. The upper and lower lips 13, 14 form a V-shape with a substantially right angle between legs of the V-shape, which are formed by the wings. When projected on the inlet opening, the V-shape extends from the apex 9, to a horizontal centre line of the inlet opening, near the edge. In this way, the V-shaped outlet end 5 is substantially the largest that can fit within the circle defined by the inlet opening. The length of the sealing line 10 is thus significantly larger than the width of the inlet opening, for instance about 135% of the width of the inlet opening (in this case the diameter of the inlet opening).

Figure 4B schematically shows a view of the valve 2 taken in a direction opposite to the flow direction, with the tubular structure 6 in its open state. The outlet end 5 has divided such that a substantially circular outlet opening 11 is formed. The conical structure and apex 9, 9' have split to open up the outlet opening 11. Due to the length of the sealing line, the outlet end 5 defines the outlet opening 11, which has an area of about 80% of the area of the inlet opening, even without elastic stretching. With an elastic outlet end 5, the outlet opening 11 may expand to substantially the entire area of the inlet opening.

The invention has been described by reference to certain embodiments discussed above. It will be recognized that these embodiments are susceptible to various modifications and alternative forms well known to those of skill in the art.

Accordingly, although specific embodiments have been described, these are examples only and are not limiting upon the scope of the invention which is defined by the appended claims.

## Claims

1. A valve (2) for a drain channel (1) of a sanitary appliance, comprising:
a flexible tubular structure (6) extending between an inlet end defining an inlet opening (4) for receiving fluid into an interior of the tubular structure, and an outlet end (5) downstream of the inlet opening, the tubular structure defining a flow direction (f),
wherein the tubular structure is adapted to deform from
- a closed state, in absence of fluid applying a pressure to the interior of the tubular structure, in which the outlet end is closed, to
- an open state, in response to a pressure of fluid applied to the interior of the tubular structure, in which the outlet end is open, defining an outlet opening;
**characterised in that** the outlet end has a V-shaped cross-section across the flow direction when the tubular structure is in the closed state.

2. The valve according to claim 1, wherein the inlet end comprises a flange (3), preferably having a circular shape.

3. The valve according to claim 1 or 2, wherein in the closed state the tubular structure comprises a conical structure (7) with a base and an apex (9), and wherein the base is substantially parallel to the inlet opening and the apex coincides with the central point of the V-shaped cross-section of the outlet end, preferably wherein the length of the conical structure and the width of the inlet opening have a size ratio of between 0.5:1 and 2:1, more preferably about 1.2:1.

4. The valve according to any one of the preceding claims, wherein the tubular structure comprises two lateral wings (8) along the flow direction, wherein in the closed state the wings together form the V-shaped cross-section at the outlet end.

5. The valve according to any one of the preceding claims, wherein in the closed state the V-shaped cross-section defines an angle of between 60 and 150 degrees, preferably about 90 degrees, between the straight portions of the V-shape.

6. The valve according to any one of the preceding claims, wherein in the closed state the V-shaped cross-section defines a sealing line with a length which is between 100% and 200% of the width of the inlet opening, preferably between 120% and 150% of the width of the inlet opening.

7. The valve according to any one of the preceding claims, wherein the valve is sized such that in the closed state the apex and the lateral tips of the wings are close to or in contact with the drain channel.

8. The valve according to any one of the preceding claims, wherein the outlet opening has, without stretching, an area of at least 60% of the inlet opening, preferably at least 70% of the inlet opening, more preferably about 80% of the inlet opening and/or wherein the outlet opening has, with stretching, an area of at least 90% of the area of the inlet opening, preferably substantially equal to the area of the inlet opening.

9. The valve according to any one of the preceding claims, wherein the tubular structure is made of elastic and/or resilient material, preferably silicone rubber or EPDM or VITON.

10. The valve according to any one of the preceding claims, wherein the valve is formed integrally by injection moulding.

11. The valve according to any one of the preceding claims, wherein walls of the tubular structure at the inlet end have a thickness of between 0.2 and 2 millimetres, more preferably between 0.5 and 1.5 millimetres and/or wherein walls of the outlet end have a thickness of between 0.3 and 1 millimetres, preferably about 0.5 millimetres.

12. The valve according to any one of the preceding claims, wherein the width of the inlet opening is between 20 and 200 millimetres, preferably between 40 and 120 millimetres, and/or the V-shaped cross-section includes straight portions which have a length of between 10 and 150 millimetres, preferably between 60 and 120 millimetres.

13. A drain channel part for placement between a sanitary appliance and a public sewer system, wherein the drain channel part includes a valve according to any one of the preceding claims.

14. The drain channel part according to claim 13, wherein the valve comprises a flange, gripped between engaging portions of a circumferential wall of the drain channel part.

15. A sanitary appliance, such as an urinal, drain or sink channel, including a valve according to any one of claims 1-12.

## Patentansprüche

1. Ventil (2) für einen Ablaufkanal (1) für eine Sanitärarmatur, mit:
einer flexiblen schlauchförmigen Struktur (6), die sich zwischen einem Einlassende, das eine Einlassöffnung (4) zur Aufnahme eines Fluids in ein Inneres der schlauchförmigen Struktur definiert, und einem Auslassende (5) stromabwärts der Einlassöffnung erstreckt, wobei die schlauchförmige Struktur eine Strömungsrichtung (f) definiert,
wobei die schlauchförmige Struktur so angepasst ist, dass sie sich verformt von
- einem geschlossenen Zustand in dem das Auslassende geschlossen ist, in der Abwesenheit von Fluid, das einen Druck auf das Innere der schlauchförmigen Struktur aufbringt, zu
- einem offenen Zustand in dem das Auslassende, der eine Auslassöffnung definiert, geöffnet ist, in Reaktion auf einen Druck eines Fluids, der auf das Innere der schlauchförmigen Struktur aufgebracht wird;
**dadurch gekennzeichnet, dass**
das Auslassende einen V-förmigen Querschnitt hat, quer zu der Strömungsrichtung, wenn die schlauchförmige Struktur in dem geschlossenen Zustand ist.

2. Ventil nach Anspruch 1, wobei das Einlassende einen Flansch (3) aufweist, der vorzugsweise eine kreisförmige Form hat.

3. Ventil nach Anspruch 1 oder 2, wobei die schlauchförmige Struktur in dem geschlossenen Zustand eine konische Struktur (7) aufweist, mit einer Basis und einem Scheitelpunkt (9), und wobei die Basis im Wesentlichen parallel zu der Einlassöffnung ist und der Scheitelpunkt mit dem Mittelpunkt des V-förmigen Querschnitts des Auslassendes zusammenfällt, wobei vorzugsweise die Länge der konischen Struktur und die Weite der Einlassöffnung ein Größenverhältnis von zwischen 0,5:1 und 2:1 haben, noch bevorzugter ungefähr 1,2:1.

4. Ventil nach einem der vorherigen Ansprüche, wobei die schlauchförmige Struktur zwei seitliche Flügel (8) entlang der Strömungsrichtung aufweist, wobei die Flügel in dem geschlossenen Zustand zusammen den V-förmigen Querschnitt an dem Auslassende bilden.

5. Ventil nach einem der vorherigen Ansprüche, wobei der V-förmige Querschnitt in dem geschlossenen Zustand einen Winkel zwischen den geraden Abschnitten der V-Form von zwischen 60 und 150° definiert, vorzugsweise ungefähr 90°.

6. Ventil nach einem der vorherigen Ansprüche, wobei der V-förmige Querschnitt in dem geschlossenen Zustand eine Dichtlinie mit einer Länge definiert, die zwischen 100% und 200% der Weite der Einlassöffnung ist, vorzugsweise zwischen 120% und 150% der Weite der Einlassöffnung.

7. Ventil nach einem der vorherigen Ansprüche, wobei das Ventil so bemessen ist, dass in dem geschlossenen Zustand der Scheitelpunkt und seitliche Spitzen der Flügel nahe zu oder in Kontakt mit dem Ablaufkanal sind.

8. Ventil nach einem der vorhergehenden Ansprüche, wobei die Auslassöffnung ohne Dehnung einen Bereich von zumindest 60% der Einlassöffnung hat, vorzugsweise zumindest 70% der Einlassöffnung, noch bevorzugter ungefähr 80% der Einlassöffnung, und/oder wobei die Auslassöffnung mit Dehnung einen Bereich von zumindest 90% des Bereichs der Einlassöffnung hat, vorzugsweise im Wesentlichen gleich zu dem Bereich der Einlassöffnung ist.

9. Ventil nach einem der vorhergehenden Ansprüche, wobei die schlauchförmige Struktur aus einem elastischen und/oder federnden Material hergestellt ist, vorzugsweise einem Silikongummi oder EPDM oder Viton.

10. Ventil nach einem der vorhergehenden Ansprüche, wobei das Ventil mittels Spritzgießen integral gebildet ist.

11. Ventil nach einem der vorhergehenden Ansprüche, wobei Wände der schlauchförmigen Struktur an dem Einlassende eine Dicke von zwischen 0,2 und 2 mm haben, bevorzugter zwischen 0,5 und 1,5 mm, und/oder wobei Wände des Auslassendes eine Dicke von zwischen 0,3 und 1 mm haben, vorzugsweise ungefähr 0,5 mm.

12. Ventil nach einem der vorhergehenden Ansprüche, wobei die Weite der Einlassöffnung zwischen 20 und 200 mm ist, vorzugsweise zwischen 40 und 120 mm, und/oder der V-förmige Querschnitt gerade Abschnitte beinhaltet, die eine Länge von zwischen 10 und 150 mm haben, vorzugsweise zwischen 60 und 120 mm.

13. Ablaufkanalteil zum Platzieren zwischen einer Sanitärarmatur und einem öffentlichen Abwasserrohrsystem, wobei das Ablaufkanalteil ein Ventil entsprechend einem der vorhergehenden Ansprüche beinhaltet.

14. Ablaufkanalteil nach Anspruch 13, wobei das Ventil einen Flansch aufweist, der zwischen Eingriffsabschnitten einer umlaufenden Wand des Ablaufkanalteils gegriffen wird.

15. Sanitärarmatur, wie ein Urinal, ein Abfluss oder Absinkkanal, das ein Ventil nach einem der Ansprüche 1 bis 12 beinhaltet.

## Revendications

1. Vanne (2) pour un canal de drainage (1) d'un appareil sanitaire, comprenant :
une structure tubulaire flexible (6) s'étendant entre une extrémité d'entrée définissant une ouverture d'entrée (4) pour recevoir un fluide à l'intérieur de la structure tubulaire, et une extrémité de sortie (5) en aval de l'ouverture d'entrée,
la structure tubulaire définissant une direction d'écoulement (f),
dans laquelle la structure tubulaire est adaptée pour se déformer depuis
- un état fermé, en l'absence de fluide appliquant une pression à l'intérieur de la structure tubulaire, dans lequel l'extrémité de sortie est fermée, vers
- un état ouvert, en réponse à une pression de fluide appliquée à l'intérieur de la structure tubulaire, dans lequel l'extrémité de sortie est ouverte, en définissant une ouverture de sortie ;
**caractérisée en ce que** l'extrémité de sortie présente une section transversale en V dans la direction d'écoulement lorsque la structure tubulaire est dans l'état fermé.

2. Vanne selon la revendication 1, dans laquelle l'extrémité d'entrée comprend une bride (3), présentant de préférence une forme circulaire.

3. Vanne selon la revendication 1 ou 2, dans laquelle dans l'état fermé, la structure tubulaire comprend une structure conique (7) avec une base et un sommet (9), et dans laquelle la base est sensiblement parallèle à l'ouverture d'entrée et le sommet coïncide avec le point central de la section transversale en forme de V de l'extrémité de sortie, de préférence dans laquelle la longueur de la structure conique et la largeur de l'ouverture d'entrée présentent un rapport de taille compris entre 0,5:1 et 2:1, de manière plus préférée d'environ 1,2:1.

4. Vanne selon l'une quelconque des revendications précédentes, dans laquelle la structure tubulaire comprend deux ailes latérales (8) le long de la direction d'écoulement, dans laquelle, dans l'état fermé, les ailes forment ensemble la section transversale en forme de V au niveau de l'extrémité de sortie.

5. Vanne selon l'une quelconque des revendications précédentes, dans laquelle, dans l'état fermé, la section transversale en forme de V définit un angle compris entre 60 et 150 degrés, de préférence d'environ 90 degrés, entre les parties droites de la forme en V.

6. Vanne selon l'une quelconque des revendications précédentes, dans laquelle, dans l'état fermé, la section transversale en forme de V définit une ligne d'étanchéité avec une longueur qui est comprise entre 100 % et 200 % de la largeur de l'ouverture d'entrée, de préférence entre 120 % et 150 % de la largeur de l'ouverture d'entrée.

7. Vanne selon l'une quelconque des revendications précédentes, dans laquelle la vanne est dimensionnée de telle sorte que, dans l'état fermé, le sommet et les pointes latérales des ailes sont proches du canal de drainage ou en contact avec celui-ci.

8. Vanne selon l'une quelconque des revendications précédentes, dans laquelle l'ouverture de sortie présente, sans étirement, une aire d'au moins 60 % de l'ouverture d'entrée, de préférence d'au moins 70 % de l'ouverture d'entrée, de manière plus préférée d'environ 80 % de l'ouverture d'entrée et/ou dans laquelle l'ouverture de sortie présente, avec étirement, une aire d'au moins 90 % de l'aire de l'ouverture d'entrée, de préférence sensiblement égale à l'aire de l'ouverture d'entrée.

9. Vanne selon l'une quelconque des revendications précédentes, dans laquelle la structure tubulaire est faite d'un matériau élastique et/ou résilient, de préférence du caoutchouc de silicone ou de l'EPDM ou du VITON.

10. Vanne selon l'une quelconque des revendications précédentes, dans laquelle la vanne est formée d'un seul tenant par moulage par injection.

11. Vanne selon l'une quelconque des revendications précédentes, dans laquelle des parois de la structure tubulaire à l'extrémité d'entrée présentent une épaisseur comprise entre 0,2 et 2 millimètres, de préférence entre 0,5 et 1,5 millimètre et/ou dans laquelle les parois de l'extrémité de sortie présentent une épaisseur comprise entre 0,3 et 1 millimètre, de préférence d'environ 0,5 millimètre.

12. Vanne selon l'une quelconque des revendications précédentes, dans laquelle la largeur de l'ouverture d'entrée est comprise entre 20 et 200 millimètres, de préférence entre 40 et 120 millimètres, et/ou la section transversale en forme de V comprend des parties droites qui présentent une longueur comprise entre 10 et 150 millimètres, de préférence entre 60 et 120 millimètres.

13. Partie de canal de drainage destinée à être placée entre un appareil sanitaire et un système d'égout public, dans laquelle la partie de canal de drainage comprend une vanne selon l'une quelconque des revendications précédentes.

14. Partie de canal de drainage selon la revendication 13, dans laquelle la vanne comprend une bride, serrée entre des parties de mise en prise d'une paroi circonférentielle de la partie de canal de drainage.

15. Appareil sanitaire, tel qu'un canal d'urinoir, de drainage ou de lavabo, comprenant une vanne selon l'une quelconque des revendications 1 à 12.
